# EUROPÄISCHE PATENTSCHRIFT

(11) **EP 0 864 458 B1**
(45) Veröffentlichungstag und Bekanntmachung des Hinweises auf die Patenterteilung: **03.04.2002**
(21) Anmeldenummer: 97121820.1
(22) Anmeldetag: 11.12.1997
(51) Int. Cl.: B60K 15/077, F02M 37/02

(54) **Vorrichtung zur Kraftstoffversorgung einer Brennkraftmaschine**
Device for controlling the supply of fuel to a combustion engine
Dispositif d'alimentation de carburant pour un monteur à combustion

(30) Priorität: 09.05.1997 DE 19719607; 10.03.1997 DE 19712760
(43) Veröffentlichungstag der Anmeldung: 16.09.1998
(73) Patentinhaber: ROBERT BOSCH GMBH, 70442 Stuttgart (DE)
(72) Erfinder: Frank, Kurt, 73614 Schorndorf (DE); Gabauer, Wolfgang, 71679 Asperg (DE); Strohl, Willi, 71717 Beilstein (DE)

(56) Entgegenhaltungen:
- DE-A- 19 516 890

## Beschreibung

### Stand der Technik

Die Erfindung betrifft eine Vorrichtung zur Kraftstoffversorgung einer Brennkraftmaschine eines Kraftfahrzeugs der im Oberbegriff des Anspruchs 1 definierten Gattung.

Eine solche Vorrichtung zur Kraftstoffversorgung einer Brennkraftmaschine ist durch das gattungsbildende Dokument DE 195 16 890 A1 bekannt. Bei dieser Vorrichtung ist ein mindestens zwei Bevorratungskammern und eine Entnahmekammer aufweisender Kraftstoffbehälter vorgesehen und eine saugseitig mit der Entnahmekammer und druckseitig mit einer zu der Brennkraftmaschine führenden Förderleitung verbundene Kraftstoffpumpe. Im Kraftstoffbehälter mündet eine Kraftstoffleitung, durch die ein Teil des von der Kraftstoffpumpe geförderten Kraftstoffs in den Kraftstoffbehälter gelangt. In jeweils einer der Bevorratungskammern sind vom durch die Kraftstoffleitung fliessenden Kraftstoffstrom angetriebene Umpumpvorrichtungen angeordnet, die als Strahlpumpen ausgebildet sind, zum Umpumpen von Kraftstoff aus der einen Bevorratungskammer in die andere Bevorratungskammer oder in die Entnahmekammer. Es ist ein Druckregler vorgesehen, durch den bei Überschreiten eines vorgegebenen Drucks ein Teil des von der Kraftstoffpumpe geförderten Kraftstoffs durch die Kraftstoffleitung in den Kraftstoffbehälter zurückgeleitet wird. Der Druckregler bildet funktional ein Ventil, das einen den Umpumpvorrichtungen zufließenden Teilstrom des durch die Kraftstoffleitung fließenden Kraftstoffstroms in Abhängigkeit vom Kraftstoffverbrauch der Brennkraftmaschine sperrt. Der Druckregler als Ventil ist von der den Druckregler durchfließenden Kraftstoffmenge gesteuert. Der Druckregler als Ventil weist drei über eine Ventilkammer miteinander in Verbindung stehende Anschlüsse auf, von denen ein erster Ventilanschluß mit der Kraftstoffleitung und die beiden weiteren Ventilanschlüsse mit einer Umpumpvorrichtung verbunden sind. Die beiden mit den Umpumpvorrichtungen verbundenen Ventilanschlüsse sind in Abhängigkeit von der über den ersten Ventilanschluß einströmenden Kraftstoffmenge aufsteuerbar.

Bei dieser bekannten Vorrichtung können beide Umpumpvorrichtungen erst betrieben werden, wenn der durch die Kraftstoffpumpe erzeugte Druck den vom Druckregler eingestellten Druck überschreitet und vom Druckregler abgesteuerter Kraftstoff durch die Kraftstoffleitung zurückfließt. Hierdurch kann unter Umständen durch die Kraftstoffpumpe nicht genügend Kraftstoff gefördert werden, um einen Betrieb der Brennkraftmaschine sicherzustellen.

Bei einer durch die DE 39 15 185 C1 bekannten Vorrichtung mit einem als sogenanntem Satteltank ausgebildeten Kraftstoffbehälter ist in jeder der beiden von einer Satteltasche gebildeten Bevorratungskammern eine Saugstrahlpumpe oder Strahlpumpe, bestehend aus einer Injektordüse und einem Injektortrichter, nahe dem Behälterboden angeordnet. Die im Kraftstoffbehälter mündende Rücklaufleitung ist über einen Verteilerraum an die beiden Strahlpumpen angeschlossen. An dem Injektortrichter der ersten Strahlpumpe in der ersten Bevorratungskammer ist eine in der zweiten Bevorratungskammer mündende erste Zuführleitung und an dem Injektortrichter der zweiten Strahlpumpe in der zweiten Bevorratungskammer ist eine in der Entnahmekammer mündende zweite Zuführleitung angeschlossen. Die Entnahmekammer ist innerhalb der zweiten Bevorratungskammer auf dem Behälterboden befestigt und nimmt die Kraftstoffpumpe auf. Bei Betrieb der Brennkraftmaschine teilt sich der Kraftstoff-Rücklaufstrom auf die beiden Strahlpumpen auf. Die Kraftstoffpumpe ist dabei so ausgelegt, daß die zur Speisung beider Strahlpumpen erforderliche Rücklaufmenge auch noch bei maximalem Kraftstoffverbrauch der Brennkraftmaschine ausreichend ist.

Bei Brennkraftmaschinen mit extrem hohem Vollastverbrauch ist jedoch die Rücklaufmenge zur Speisung beider Strahlpumpen zu klein, so daß die Funktion der die Entnahmekammer befüllenden Strahlpumpe in der einen Bevorratungskammer nicht mehr gewährleistet ist. Abhilfe schafft man hier in der Regel durch Zuschalten einer zweiten Kraftstoffpumpe.

Bei einer weiteren, durch die DE 42 24 981 A1 bekannten Kraftstoff-Fördereinrichtung wird die den Kraftstoff aus einer Bevorratungskammer in die Entnahmekammer umpumpende Strahlpumpe mit einem Kraftstoffstrom betrieben, der über eine Abzweigleitung von der Förderleitung nahe dem Ausgang der Kraftstoffpumpe abgezweigt ist. Um ein zuverlässig rasches Starten der Brennkraftmaschine sicherzustellen, ist in der Zweigleitung vor der Strahlpumpe ein Sperrventil angeordnet, das erst bei Überschreiten eines bestimmten Grenzdrucks in der Zweigleitung öffnet. Damit wird das während der Startphase störende Entweichen von Kraftstoff über die zweigleitung und die Strahlpumpe vermieden.

Die Vorrichtung zur Kraftstoffversorgung einer Brennkraftmaschine mit den Merkmalen gemäß Anspruch 1 hat demgegenüber den Vorteil, daß eine der Umpumpvorrichtungen ständig über die gedrosselte Verbindung mit dem Ventilanschluß betrieben wird, so daß der Betrieb der Brennkraftmaschine auch bei geringer durch die Kraftstoffpumpe geförderter Kraftstoffmenge sichergestellt ist.

### Zeichnung

Die Erfindung ist anhand von in der Zeichnung dargestellten Ausführungsbeispielen in der nachfolgenden Beschreibung näher erläutert. Es zeigen jeweils in schematischer Darstellung:
Fig. 1 eine Brennkraftmaschine mit einer Vorrichtung zur Kraftstoffversorgung,
Fig. 2 bis 4 jeweils einen Längsschnitt eines Ventils der Vorrichtung gemäß Fig. 1 in drei verschiedenen Schaltstellungen,
Fig. 5 eine gleiche Darstellung wie in Fig. 2 eines modifizierten Ventils,
Fig. 6 eine Brennkraftmaschine mit einer Vorrichtung zur Kraftstoffversorgung gemäß einer modifizierten Ausführung

### Beschreibung der Ausführungsbeispiele

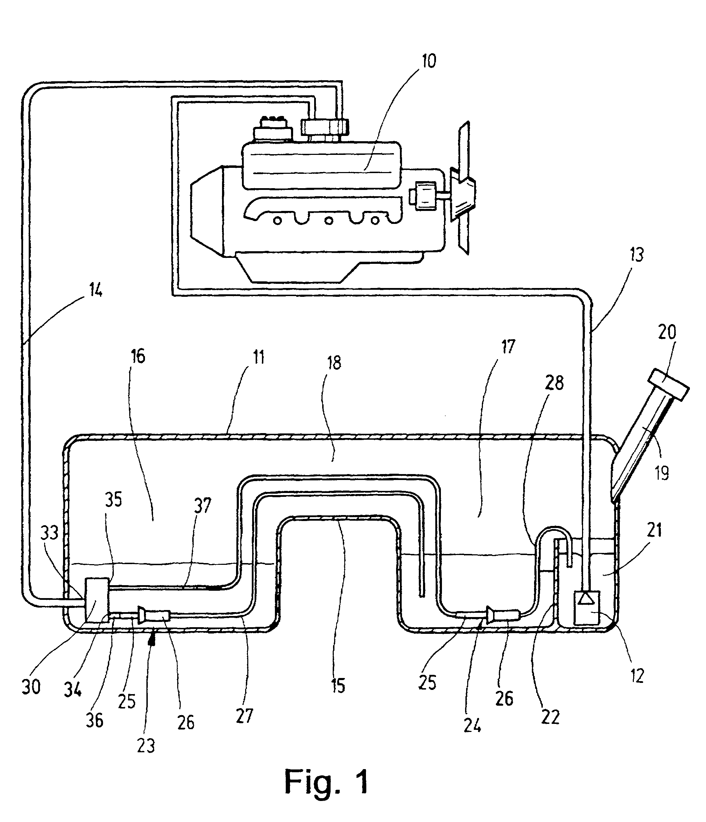

In Fig. 1 ist mit 10 eine Brennkraftmaschine angedeutet, deren Kraftstoffbedarf von einer Versorgungsvorrichtung gedeckt wird. Die Kraftstoffversorgungsvorrichtung umfaßt einen Kraftstoffbehälter 11 und eine im Kraftstoffbehälter 11 angeordnete Kraftstoffpumpe 12, die Kraftstoff aus dem Kraftstoffbehälter 11 ansaugt und über eine Förderleitung 13 zu der Brennkraftmaschine 10 fördert. Überschüssiger, in der Brennkraftmaschine 10 nicht verbrauchter Kraftstoff fließt über eine Rücklaufleitung 14 in den Kraftstoffbehälter 11 zurück. Die Rücklaufleitung 14 kann auch von einem nicht dargestellten Druckregler abführen, durch den der Druck in der Einspritzeinrichtung der Brennkraftmaschine in einer vorgegebenen Höhe geregelt wird. Der Druckregler kann dabei am oder im Kraftstoffbehälter angeordnet sein oder entfernt von diesem.

Der Kraftstoffbehälter 11 ist als sogenannter Satteltank ausgeführt, der derart konzipiert ist, daß er beispielsweise unter dem Fondsitz eines Personenkraftwagens installiert werden kann. Zu diesem Zweck bildet der mittlere Bereich des Kraftstoffbehälters 11 einen Tunnel 15 zum Hindurchführen einer Gelenkwelle für einen Hinterachsantrieb. Dieser Tunnel teilt den Kraftstoffbehälter 11 nach Art von Satteltaschen in zwei Bevorratungskammern 16,17, die durch einen Überbrückungsraum 18 miteinander verbunden sind. Der Kraftstoffbehälter 11 wird über einen Einfüllstutzen 19, der von einem Tankdeckel 20 abgeschlossen ist, gefüllt. Die Kraftstoffpumpe 12 ist in einer Entnahmekammer 21, die innerhalb der Bevorratungskammer 17 mittels einer vom Behälterboden vertikal abstrebenden Trennwand 22 abgetrennt ist, integriert. In jeder Bevorratungskammer 16,17 ist eine Umpumpvorrichtung in Form einer Saugstrahlpumpe oder Strahlpumpe 23,24 angeordnet, wobei die Strahlpumpe 23 zum Umpumpen von Kraftstoff aus der Bevorratungskammer 16 in die Bevorratungskammer 17 und die Strahlpumpe 24 zum Umpumpen von Kraftstoff aus der Bevorratungskammer 17 in die Entnahmekammer 21 dient. Jede nach dem Venturiprinzip arbeitende Strahlpumpe 23,24 besteht in bekannter Weise aus einer Injektordüse 25 und einem Injektortrichter 26. Der zur Bevorratungskammer 16 hin offene Injektortrichter 26 ist endseitig an einem in der Bevorratungskammer 17 mündenden Verbindungsrohr 27 und der zur Bevorratungskammer 17 hin offene Injektortrichter 26 der Strahlpumpe 24 ist endseitig an einem in der Entnahmekammer 21 mündenden Verbindungsrohr 28 angeschlossen. Die beiden Injektordüsen 25 der Strahlpumpen 23,24 stehen über ein Ventil mit der Rücklaufleitung 14 in Verbindung, so daß in bekannter Weise durch jeden durch die Injektordüsen 25 der Strahlpumpen 23,24 hindurchströmenden Kraftstoffstrom aus der jeweiligen Bevorratungskammer 16,17 Kraftstoff über den Injektortrichter 26 mitgerissen wird und über die Verbindungsrohre 27,28 in die Bevorratungskammer 17 bzw. in die Entnahmekammer 21 gelangt. Die beiden Strahlpumpen 23,24 stellen sicher, daß die Entnahmekammer 21, aus welcher die Kraftstoffpumpe 12 den Kraftstoff ansaugt, stets gefüllt ist und von der Kraftstoffpumpe 12 erst dann geleert wird, wenn der Kraftstoff in den Bevorratungskammern 16,17 aufgebraucht ist. Das zwischen der Rücklaufleitung 14 und den beiden Strahlpumpen 23,24 vorhandene Ventil 30 sorgt dafür, daß bei sehr hohem Kraftstoffverbrauch der Brennkraftmaschine 10 vorübergehend die Strahlpumpe 23 abgeschaltet wird, so daß die über die Rücklaufleitung 14 in den Kraftstoffbehälter 11 zurückströmende, stark reduzierte Kraftstoffmenge zumindest ausreicht, den ungestörten Betrieb der Strahlpumpe 24 in der Bevorratungskammer 17 zur Befüllung der Entnahmekammer 21 aufrecht zu erhalten. Sobald der Kraftstoffverbrauch der Brennkraftmaschine wieder sinkt und der über die Rücklaufleitung 14 in den Kraftstoffbehälter 11 zurückströmende überschüssige Kraftstoff wieder mengenmäßig zunimmt, gibt das Ventil 30 auch die Verbindung der Rücklaufleitung 14 zu der Strahlpumpe 23 wieder frei, so daß beide Strahlpumpen 23,24 wieder arbeiten.

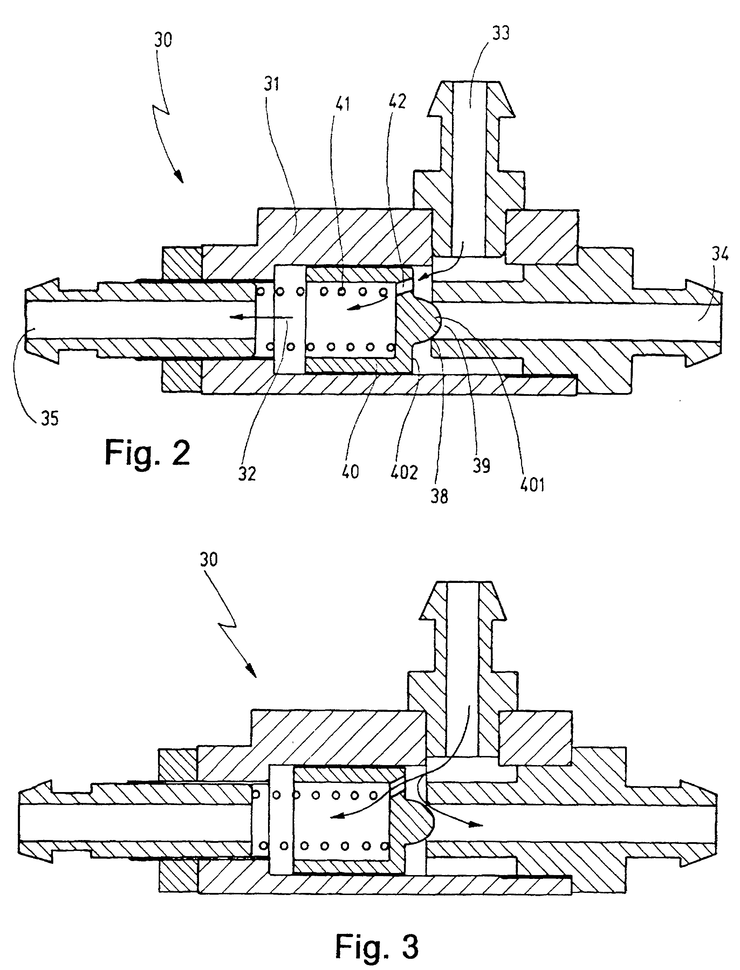

Der Aufbau des Ventils 30 ist im einzelnen in den Schnittdarstellungen der Fig. 2 bis 4 zu sehen. Das Ventil 30 weist einen Ventilkörper 31 auf, in dem eine Ventilkammer 32 ausgebildet ist. In der Ventilkammer 32 münden drei in den Ventilkörper 31 eingesetzte Ventilanschlüsse 33 bis 35 mit Anschlußstutzen. Der erste Ventilanschluß 33 dient zum Anschließen der Rücklaufleitung 14, der zweite Ventilanschluß 34 zum Anschließen einer zu der Injektordüse 25 der Strahlpumpe 23 führenden Verbindungsleitung 36 und der dritte Ventilanschluß 35 zum Anschließen einer zu der Injektordüse 25 der Strahlpumpe 24 führenden Verbindungsleitung 37. An der Mündung des Ventilanschlusses 34 in der Ventilkammer 32 ist eine von einem Ventilsitz 38 umschlossene Ventilöffnung 39 ausgebildet, die von einem mit dem Ventilsitz 38 zusammenwirkenden Ventilglied 40 in Abhängigkeit von der die Ventilkammer 32 durchfließenden Kraftstoffrücklaufmenge gesteuert wird. Dabei ist die Ventilgeometrie so gestaltet, daß die Ventilöffnung 39 proportional zu der über den ersten Ventilanschluß 33 im das Ventil 30 einströmenden Kraftstoffmenge aufgesteuert wird und das Aufsteuern der Ventilöffnung 39 erst bei Überschreiten einer über den Ventilanschluß 35 abfließenden Mindestkraftstoffmenge, die für den Betrieb der Strahlpumpe 24 erforderlich ist, erfolgt.

Im einzelnen ist das in der Ventilkammer 32 verschieblich einliegende Ventilglied 40 von einer als Schraubendruckfeder ausgebildeten Ventilschließfeder 41 in Ventilschließrichtung beaufschlagt, die das Ventilglied 40 mit einem daran einstückig ausgebildeten Dichtungskörper 401 auf den Ventilsitz 38 aufpreßt. Am Ventilglied 40 ist ringförmig um den Dichtungskörper 401 eine Steuerfläche 402 ausgebildet, die von dem über den ersten Ventilanschluß 33 einströmenden Kraftstoff beaufschlagt wird. Der Kraftstoffdruck auf der Steuerfläche 402 wirkt der Schließkraft der Ventilschließfeder 41 entgegen, so daß bei genügender Druckbeaufschlagung das Ventilglied 40 in Fig. 2 nach links verschoben wird und der Dichtungskörper 401 zunehmend vom Ventilsitz 38 abhebt. Im Ventilglied 40 ist eine Drosselbohrung 42 eingebracht, über welche der Ventilanschluß 33 mit dem mit der Strahlpumpe 24 verbundenen Ventilanschluß 35 in ständiger Verbindung steht.

Die Wirkungsweise des Ventils 30 ist wie folgt:

Fig. 2 zeigt das Ventil in seiner Grundstellung. Die Ventilöffnung 39 ist von dem Ventilglied 40 unter der Wirkung der Rückstellfeder 41 geschlossen. Die über die Rücklaufleitung 14 und den ersten Ventilanschluß 33 in die Ventilkammer 32 einströmende Kraftstoffrücklaufmenge strömt über die Drosselbohrung 42 zu dem Ventilanschluß 35 und von dort über die Verbindungsleitung 37 zur Strahlpumpe 24 in der zweiten Bevorratungskammer 17. Die Rücklaufmenge ist auslegungsgemäß genügend groß, um den Betrieb der Strahlpumpe 24 aufrechtzuerhalten, so daß die Entnahmekammer 21 durch Umpumpen von Kraftstoff aus der Bevorratungskammer 17 ständig mit Kraftstoff gefüllt gehalten wird.

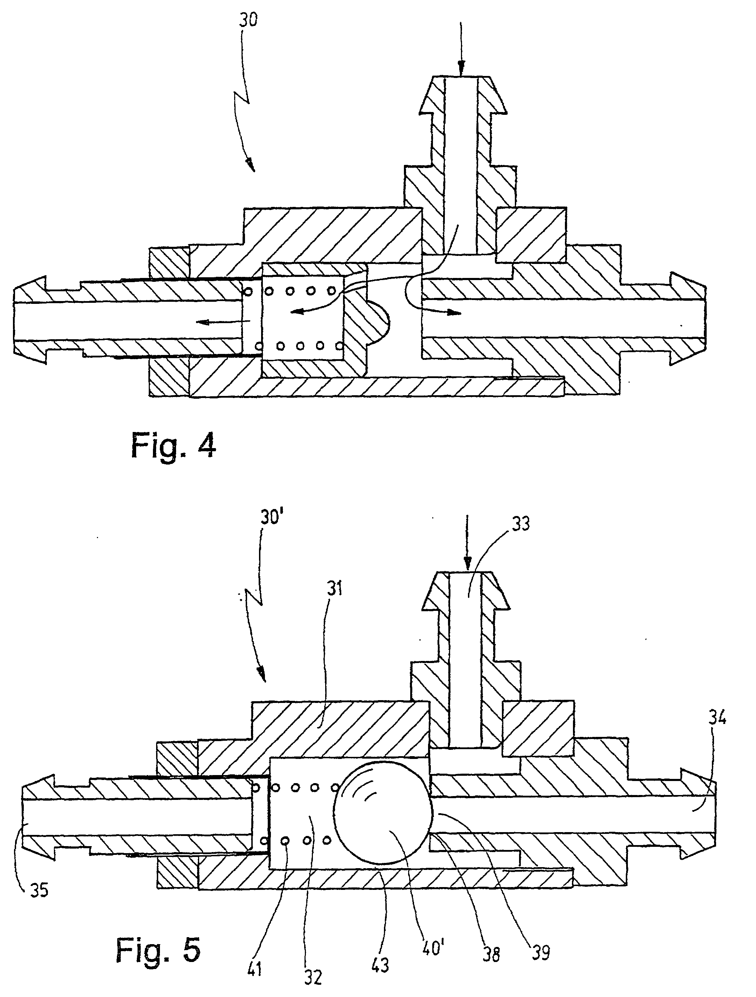

Wächst nun die Kraftstoffrücklaufmenge infolge geringeren Verbrauchs der Brennkraftmaschine an, so steigt der Druckabfall über die Drosselbohrung 42, bis die durch Druckabfall und Ventilgeometrie gegebene hydraulische Kraft auf das Ventilglied 40 größer ist als die Vorspannung der Ventilschließfeder 41 und der Dichtungskörper 401 gerade vom Ventilsitz 38 abhebt. Dieser Zustand ist in Fig. 3 illustriert. Wie bereits schon angedeutet ist, ist die Federkraft der Ventilschließfeder 41 und die Ventilgeometrie so ausgelegt, daß jetzt die über den ersten Ventilanschluß einströmende Kraftstoffrücklaufmenge, die für den Betrieb der Strahlpumpe 24 erforderliche Mindesttreibmenge übersteigt. Steigt die Kraftstoffrücklaufmenge nun weiter an, so wird diese Mehrmenge zunächst am Ventilsitz 38 abgesteuert. Das Ventilglied 40 hebt sich nur leicht vom Ventilsitz 38 ab und gibt gerade so viel Querschnitt frei, daß die Mehrmenge abströmen kann und der Druckabfall über die Drossel 42 quasi konstant bleibt. Die Mehrmenge strömt über den zweiten Ventilanschluß 34 zur Strahlpumpe 23 in der Bevorratungskammer 16 ab. Solange diese Mehrmenge kleiner ist als die zum Betrieb der Strahlpumpe 23 erforderliche Treibmenge ist die Strahlpumpe 23 noch nicht funktionsfähig. Erreicht die abgesteuerte Mehrmenge nunmehr die für die Funktion der Strahlpumpe 23 erforderliche Mindesttreibmenge, so baut sich vor der Strahlpumpe 23 auch der entsprechende Treibdruck auf. Dieser Treibdruck übt nun über die Sitzfläche des Dichtungskörpers 401 eine zusätzliche Kraft auf das Ventilglied 40 aus. Die Ventilgeometrie ist so ausgelegt, daß die Gesamtheit der auf das Ventilglied 40 wirkenden Kräfte nun ausreicht, um dieses vom Ventilsitz 38 abzuheben, d.h. das Ventil 30 öffnet vollständig, sobald die über den Ventilanschluß 33 einströmende gesamte Kraftstoffrücklaufmenge größer oder gleich der Summe der Mindesttreibmengen für die beiden Strahlpumpen 23,24 ist (Fig. 4).

Das in Fig. 5 dargestellte modifizierte Ventil 30' ist gegenüber dem beschriebenen Ventil 30 insoweit abgewandelt, als das Ventilglied 40' als Kugel ausgebildet ist, die von der Ventilschließfeder 41 auf den Ventilsitz 38 aufgepreßt wird. Die Verbindung zwischen dem Ventilanschluß 33 und dem Ventilanschluß 35, die bei dem Ventil gemäß Fig. 2 durch die Drosselbohrung 42 hergestellt wird, ist hier durch einen Drosselspalt 43 zwischen dem kugeligen Ventilglied 40' und der Innenwand der Ventilkammer 32 realisiert. Im übrigen sind Aufbau und Funktionsweise des modifizierten Ventils 30' gemäß Fig. 5 identisch mit dem zu Fig. 2 beschriebenen Ventil 30, so daß hierauf verwiesen wird.

Die Erfindung ist nicht auf das vorstehend beschriebene Ausführungsbeispiel beschränkt. So kann das den Kraftstoffrücklaufstrom zu der Strahlpumpe 23 in Abhängigkeit von dem Kraftstoffverbrauch der Brennkraftmaschine 10 drosselnde oder sperrende Ventil 30 bzw. 30' anstatt von der das Ventil durchfließenden Kraftstoffrücklaufmenge auch von dem Druck in der Kraftstoffrücklaufleitung 14 gesteuert werden. Ebenso ist es möglich, ein elektromagnetisch gesteuertes Ventil vorzusehen, dessen Steuersignal aus dem gemessenen Kraftstoffverbrauch der Brennkraftmaschine abgeleitet wird.

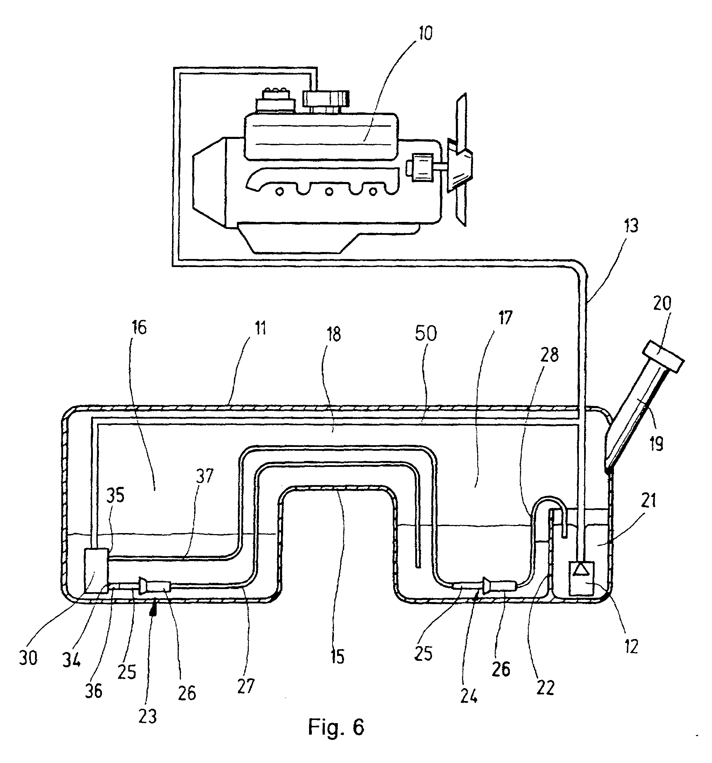

In Figur 6 ist eine modifizierte Ausführung der Vorrichtung zur Kraftstoffversorgung der Brennkraftmaschine 10 dargestellt, bei der von der Druckseite der Förderpumpe 12, beispielsweise von der Förderleitung 13, eine Kraftstoffleitung 50 abzweigt. Die Injektordüsen 25 der Strahlpumpen 23,24 stehen über das Ventil 30 bzw. 30' mit der Kraftstoffleitung 50 in Verbindung, durch die ein Teil der von der Förderpumpe 12 geförderten Kraftstoffmenge fließt und in den Kraftstoffbehälter 11 gelangt. Die Rücklaufleitung 14 kann dabei dennoch vorgesehen sein, jedoch werden durch diese nicht die Strahlpumpen 23,24 gespeist. Die Ausbildung des Ventils und dessen Wirkungsweise sind dabei gleich wie vorstehend beschrieben.

Die Anzahl der Bevorratungskammern in einem Kraftstoffbehälter 11 kann beliebig sein, wobei bei mehreren voneinander separierten Bevorratungskammern im Kraftstoffbehälter mit jeweils integrierter Strahlpumpe auch gleichzeitig mehrere Strahlpumpen stillgelegt werden können. Wichtig ist, daß die nicht von dem Ventil 30 gesteuerte Strahlpumpe immer diejenige ist, die letztlich die Entnahmekammer 21 mit Kraftstoff befüllt so daß bei maximalem Kraftstoffverbrauch der Brennkraftmaschine immer für ausreichenden Kraftstoffvorrat in der Entnahmekammer 21 gesorgt ist.

## Patentansprüche

1. Vorrichtung zur Kraftstoffversorgung einer Brennkraftmaschine mit einem mindestens zwei Bevorratungskammern (16,17) und eine Entnahmekammer (21) aufweisenden Kraftstoffbehälter (11), mit einer saugseitig mit der Entnahmekammer (21) und druckseitig mit einer zu der Brennkraftmaschine (10) führenden Förderleitung (13) verbundenen Kraftstoffpumpe (12), mit einer im Kraftstoffbehälter (11) mündenden Kraftstoffleitung (14;50), durch die ein Teil des von der Kraftstoffpumpe (12) geförderten Kraftstoffs in den Kraftstoffbehälter (11) gelangt, und mit in jeweils einer der Bevorratungskammern (16,17) angeordneten, vom durch die Kraftstoffleitung (14;50) fließenden Kraftstoffstrom angetriebenen Umpumpvorrichtungen, insbesondere Strahlpumpen (23,24), zum Umpumpen von Kraftstoff aus der einen Bevorratungskammer (16) in die andere Bevorratungskammer (17) oder in die Entnahmekammer (21), wobei ein Ventil (30;30') vorgesehen ist, das einen zumindest einer Umpumpvorrichtung (23) zufließenden Teilstrom des durch die Kraftstoffleitung (14;50) fließenden Kraftstoffstroms in Abhängigkeit vom Kraftstoffverbrauch der Brennkraftmaschine (10) sperrt, wobei das Ventil (30;30') von der das Ventil (30;30') durchfließenden Kraftstoffmenge gesteuert ist, wobei das Ventil (30;30') mindestens drei über eine Ventilkammer (32) miteinander in Verbindung stehende Ventilanschlüsse (33,34,35) aufweist, von denen ein erster Ventilanschluß (33) mit der Kraftstoffleitung (14;50) und jeweils ein weiterer Ventilanschluß (34,35) mit einer Umpumpvorrichtung (23,24) verbunden ist, und wobei mindestens einer der mit den Umpumpvorrichtungen (23,24) verbundenen Ventilanschlüsse (34,35) in Abhängigkeit von der über den ersten Ventilanschluß (33) einströmenden Kraftstoffmenge aufsteuerbar ist, **dadurch gekennzeichnet, daß** zwischen der Ventilkammer (32) und dem gesteuerten Ventilanschluß (34) eine Ventilöffnung (39) mit Ventilsitz (38) ausgebildet ist, daß auf dem Ventilsitz (38) ein Ventilglied (40;40') unter der Kraft einer Ventilschließfeder (41), die Ventilöffnung (39) verschließend, aufliegt, und daß das Ventilglied (40;40') eine von dem über den ersten Ventilanschluß (33) einströmenden Kraftstoff in Ventilöffnungsrichtung beaufschlagte Steuerfläche (402) aufweist, daß das Ventilglied (40) eine Drosselbohrung (42) aufweist oder daß zwischen dem Ventilglied (40') und der Ventilkammer (32) ein Drosselspalt (43) gebildet ist, wobei die Drosselbohrung (42) oder der Drosselspalt (43) eine permanente Verbindung zwischen dem ersten Ventilanschluß (33) und dem ungesteuerten Ventilanschluß (35) für eine Umpumpvorrichtung (24) herstellt.

2. Vorrichtung nach Anspruch 1, **dadurch gekennzeichnet, daß** die Ventilgeometrie so ausgelegt ist, daß ein Aufsteuern des Ventilanschlusses (34) erst bei Überschreiten einer über einen anderen Ventilanschluß (35) fließenden Mindestkraftstoffmenge, die für den Betrieb der daran angeschlossenen Umpumpvorrichtung (24) erforderlich ist, einsetzt.

3. Vorrichtung nach Anspruch 1 oder 2, **dadurch gekennzeichnet, daß** der ungesteuerte Ventilanschluß (35) mit der die Entnahmekammer (21) befüllenden Umpumpvorrichtung (24) verbunden ist.

## Claims

1. Apparatus for supplying fuel to an internal combustion engine with a fuel tank (11) having at least two storage chambers (16, 17) and an extraction chamber (21), with a fuel pump (12) connected on the intake side to the extraction chamber (21) and on the delivery side to a delivery line (13) leading to the internal combustion engine (10), with a fuel line (14; 50), which opens into the fuel tank (11) and through which some of the fuel delivered by the fuel pump (12) enters the fuel tank (11), and with transfer-pumping devices, in particular jet pumps (23, 24), which are each arranged in one of the storage chambers (16, 17), are driven by the flow of fuel through the fuel line (14; 50) and are intended to pump fuel out of one storage chamber (16) into the other storage chamber (17) or into the extraction chamber (21), a valve (30; 30') being provided that blocks part of the fuel flow flowing through the fuel line (14; 50), the part flowing to at least one transfer-pumping device (23), as a function of the fuel consumption of the internal combustion engine (10), the valve (30; 30') being controlled by the quantity of fuel flowing through the valve (30; 30'), the valve (30; 30') having at least three valve ports (33, 34, 35), which are connected to one another by a valve chamber (32), of which a first valve port (33) is connected to the fuel line (14; 50) and one other valve port (34, 35) in each case is connected to a transfer-pumping device (23, 24), and at least one of the valve ports (34, 35) connected to the transfer-pumping devices (23, 24) being capable of being opened as a function of the quantity of fuel flowing in via the first valve port (33), **characterized in that** a valve opening (39) with a valve seat (38) is formed between the valve chamber (32) and the controlled valve port (34), **in that** a valve member (40; 40') rests on the valve seat (38) under the force of a valve-closing spring (41), closing the valve opening (39), and **in that** the valve member (40; 40') has a control surface (402) acted upon in the valve-opening direction by the fuel flowing in via the first valve port (33), **in that** the valve member (40) has a restriction hole (42) or **in that** a restricting gap (43) is formed between the valve member (40') and the valve chamber (32), the restriction hole (42) or the restricting gap (43) establishing a permanent connection between the first valve port (33) and the uncontrolled valve port (35) for a transfer-pumping device (24).

2. Apparatus according to Claim 1, **characterized in that** the valve geometry is configured in such a way that opening of the valve port (34) starts only when a minimum quantity of fuel required for the operation of the transfer-pumping device (24) connected thereto, flowing via another valve port (35), is exceeded.

3. Apparatus according to Claim 1 or 2, **characterized in that** the uncontrolled valve port (35) is connected to the transfer-pumping device (24) that fills the extraction chamber (21).

## Revendications

1. Dispositif d'alimentation en carburant d'un moteur à combustion interne comprenant
un réservoir de carburant (11) avec au moins deux chambres réservoirs (16, 17) et une chambre de prélèvement (21),
une pompe à carburant (12) reliée du côté aspiration à la chambre de prélèvement (21) et du côté refoulement à la conduite d'alimentation (13) du moteur à combustion interne (10),
une conduite de carburant (14 ; 50) débouchant dans le réservoir à carburant (11) par laquelle une partie du carburant fourni par la pompe à carburant (12) arrive dans le réservoir (11) et
des dispositifs de pompage, notamment des pompes à jet (23, 24) pour pomper le carburant d'une chambre réservoir (16) dans l'autre chambre réservoir (17) ou dans la chambre de prélèvement (21), ces dispositifs de pompage étant prévus chaque fois dans l'une des chambres réservoirs (16, 17) en étant entraînés par le flux de carburant passant par la conduite de carburant (14 ; 50),
une soupape (30, 30') étant prévue pour couper au moins une veine partielle alimentant au moins un dispositif de pompage (23), à partir de la veine de carburant traversant la conduite de carburant (14 ; 50) en fonction de la consommation de carburant du moteur à combustion interne (10),
la soupape (30, 30') étant commandée par la quantité de carburant qui la traverse,
la soupape (30, 30') comporte au moins trois branchements (33, 34, 35) reliés entre eux par une chambre de soupape (32), dont un premier branchement (33) est relié à la conduite de carburant (14 ; 50) et chaque autre branchement (34, 35) est relié à un dispositif de pompage (23, 24),
et au moins l'un des branchements (34, 35) relié aux dispositifs de pompage (23, 24) est commandé dans le sens de l'ouverture en fonction de la quantité de carburant arrivant par le premier branchement (33),
**caractérisé par**
une ouverture de soupape (39) munie d'un siège de soupape (38) entre la chambre de soupape (32) et le branchement de soupape (34) commandé,
le siège de soupape (38) reçoit un organe d'obturation (40 ; 40') appliqué dans le sens de la fermeture, contre l'ouverture de soupape (39) sous la force d'un ressort de fermeture (41), et
l'organe d'obturation (40 ; 40') comporte une surface de commande (402) sollicitée dans le sens de l'ouverture de la soupape par le carburant arrivant du premier branchement de soupape (33),
l'organe d'obturation (40) comporte un perçage d'étranglement (42) et un intervalle d'étranglement (43) sépare entre l'organe d'obturation (40') et la chambre de soupape (32),
le perçage d'étranglement (42) ou l'intervalle d'étranglement (43) réalisent une liaison permanente entre le premier branchement de soupape (33) et le branchement de soupape (35), non commandé pour un dispositif de pompage (24).

2. Dispositif selon la revendication 1,
**caractérisé en ce que**
la géométrie de la soupape est conçue pour que la commande d'ouverture du branchement de soupape (34) ne se fait qu'après avoir dépassé une quantité minimale de carburant passant par l'autre branchement de soupape (35), quantité nécessaire pour le fonctionnement du dispositif de pompage (24) raccordé.

3. Dispositif selon l'une quelconque des revendications 1 ou 2,
**caractérisé en ce que**
le branchement de soupape (35), non commandé, est relié au dispositif de pompage (24) qui remplit la chambre de prélèvement (21).
